# EUROPÄISCHE PATENTANMELDUNG

(11) **EP 1 067 645 A1**
(43) Veröffentlichungstag der Anmeldung: **10.01.2001**
(21) Anmeldenummer: 99113323.2
(22) Anmeldetag: 09.07.1999
(51) Int. Cl.: H02G 1/12

(54) **Vorrichtung und Verfahren zum Entfernen einer Isolierschicht, Schmutzschicht oder dergleichen von elektrischen Leitungsdrähten sowie Anwendung einer Vorrichtung und des Verfahrens**

(71) Anmelder: Thien E-Motoren GmbH, 6830 Rankweil (AT)
(72) Erfinder: Preiss, Christian, A-6830 Rankwell (AT)
(74) Vertreter: Otten, Herbert

(57) **Zusammenfassung**

Es wird eine Vorrichtung und ein Verfahren zum Entfernen einer Isolierschicht, Schmutzschicht oder dergleichen von wenigstens einem elektrischen Leitungsdraht im Bereich eines vorgegebenen Abschnitts vorgeschlagen. Erfindungsgemäß wird zumindest der jeweilige Leitungsdraht mit dem abzuisolierenden/zu reinigenden Abschnitt in eine Arbeitskammer gebracht, in welcher die Isolierschicht, Schmutzschicht oder dergleichen durch einen Strahl aus Strahlmittel entfernt wird. Diese Vorgehensweise lässt sich insbesondere zum Entfernen von Isolierlack an Leitungsdrahtenden von Drahtwicklungen beim Bau von Elektromotoren, Generatoren, Transformatoren anwenden.

## Beschreibung

Die Erfindung betrifft eine Vorrichtung und ein Verfahren zum Entfernen einer Isolierschicht, Schmutzschicht oder dergleichen von wenigstens einem Leitungsdraht im Bereich eines vorgegebenen Abschnitts sowie deren Anwendung.

### Stand der Technik:

Die Entfernung von Isolierschichten ist z. B. für die Kontaktierung von Wicklungen aus Kupferdrähten bei der Herstellung von Elektromotoren, Generatoren, Transformatoren oder dergleichen erforderlich. Regelmäßig erfolgt dabei der Abisoliervorgang mittels manuellen oder elektrischen Abziehmessern. Da an jedem Draht einzeln der Lack entfernt werden muss, ist dieser Vorgang mit einem hohen Arbeitszeitaufwand belastet.

Um den Abisoliervorgang rationeller zu gestalten, sind Verfahren und dazugehörige Einrichtungen bekannt geworden, bei welchen der Lack auch an Leitungsdrahtbündeln durch große Temperaturen, beispielsweise mittels Gasbrennern, "abgebrannt" werden kann. Hierdurch wird jedoch u. a. die Oberfläche der Kupferdrähte in Mitleidenschaft gezogen.

### Aufgabe und Vorteile der Erfindung:

Der Erfindung liegt die Aufgabe zu Grunde, das Entfernen von Isolierschichten, Schmutzschichten oder dergleichen auf elektrischen Leitungsdrähten ohne wesentliche Beeinträchtigung der Leitungsdrähte rationeller und damit kostengünstiger zu gestalten.

Diese Aufgabe wir durch die Merkmale des Anspruchs 1 sowie des Anspruchs 14 gelöst.

In den Unteransprüchen sind vorteilhafte zweckmäßige Weiterbildungen der Erfindung aufgeführt.

Die Erfindung geht zunächst von einer Vorrichtung zum Entfernen einer Isolierschicht, Schmutzschicht oder dergleichen von wenigstem einem Leitungsdraht im Bereich eines vorgegebenen Abschnitts aus. Der Kern der Erfindung liegt darin, dass eine den wenigstens einen Leistungsdraht zumindest mit dem abzuisolierenden/zu reinigenden Abschnitt aufnehmende Arbeitskammer vorgesehen ist, und das die Arbeitskammer Mittel zur Zuführung eines Strahlmittelstrahles, z. B eines Sandstrahles in den Bereich des am Leitungsdraht abzuisolierenden/zu reinigenden Abschnitts umfasst. Die Erfindung macht sich dabei auf elegante Art die Erkenntnis zu Nutze, dass auf der Grundlage eines "Sandstrahlprinzips" insbesondere gekrümmte und unzugängliche Oberflächen nahezu rückstandsfrei von störenden Schichten gereinigt werden können. Durch die erfindungsgemäße Vorgehensweise können beispielsweise die Enden eines Leitungsdrahtbündels einer Wicklung für einen Elektromotor in kürzester Zeit vollständig von Isolierlack entfernt werden, um sicher leitende Kontaktflächen für einen elektrischen Anschluss des Leitungsdrahtbündels zu erhalten. Auf eine Einzelreinigung der Leitungsdrahtenden kann verzichtet werden, womit sich der Arbeitsaufwand für diesen Vorgang erheblich reduziert.

In einer besonders vorteilhaften Ausgestaltung der Erfindung steht die Arbeitskammer mit einer Einrichtung zum Absaugen von in die Arbeitskammer eingestrahltem Strahlmittel in Verbindung oder kann mit dieser in Verbindung gebracht werden. Auf diese Weise kann das Strahlmittel kontrolliert aus der Arbeitskammer abgeführt werden, so dass sich eine Verschmutzung eines Arbeitsplatzes durch Strahlmittel und/oder entferntes Isolierlackmaterial im Wesentlichen vermeiden lässt.

Um die Reinigung effektiv zu gestalten, wird im Weiteren vorgeschlagen, dass die Mittel zur Zuführung des Strahlmittel Strahles derart ausgestaltet sind, dass der Strahl schräg in Bezug auf die Längserstreckung eines Leitungsdrahtes auf diesen trifft, vorzugsweise innerhalb eines Winkels von 30 bis 60°, z. B. 45°.

In einer Weiteren bevorzugten Ausgestaltung der Erfindung umfassen die Mittel zur Zuführung des Strahlmittels eine an der Arbeitskammer angeordnete Aufnahmeeinrichtung für eine Strahlmitteldüse, die z. B. innerhalb einer Strahlmittelpistole angeordnet ist. Eine Strahlmittelpistole lässt sich an der Arbeitskammer in einfacher Weise anbringen und nach Bedarf von einer Bedienperson betätigen.

Bei einer außerdem vorteilhaften Ausgestaltung der Erfindung können auch mehrere Strahlmitteldüsen an der Arbeitskammer angeordnet werden, die z. B. durch eine einzige Strahlmittelpistole betätigt werden.

Um eine rationelle Arbeitsweise der Erfindung zu gewährleisten und die Vorrichtung einfach zu gestalten, wird überdies vorgeschlagen, dass die Arbeitskammer wenigstens eine öffnung zum Einführen von einem oder mehreren Leitungsdrahtabschnitten, z. B. Leitungsdrahtenden oder von mehreren Leitungsdrahtbündeln aufweist.

Vorzugsweise besitzt die Arbeitskammer eine öffnung zum Anbringen einer Absaugleitung der Einrichtung zum Aubsaugen von Strahlmedium. Beispielsweise kann ein Absaugschlauch lösbar in die Öffnung eingesteckt werden. Dadurch lässt sich die Absaugeinrichtung räumlich von der Arbeitskammer trennen.

Im Weiteren ist es bis besonders günstig, wenn die Arbeitskammer entsprechend der zu reinigenden Leitungsdrahtabschnitte länglich ist. In diesem Zusammenhang ist es ebenfalls bevorzugt, wenn die Arbeitskammer vertikal oder in Bezug auf die Horizontale schräg mit einem vorgegebenen Verkippungswinkel angeordnet ist. Insbesondere bei einer solchen Positionierung ist es günstig, die öffnung zum Einführen von einem oder mehreren Leitungsdrahtabschnitten an einem Ende, vorzugsweise am oberen Ende, der länglichen Arbeitskammer anzuordnen. Um einen einfachen Abtransport von in die Kammer eingestrahltem Strahlmedium zu ermöglichen, ist es außerdem vorteilhaft, wenn die Öffnung zum Anbringen einer Ansaugleitung sich im Bereich des gegenüberliegenden Endes, bei einer vertikalen oder schrägen Ausrichtung am unteren Ende der Arbeitskammer befindet.

Für eine einfache Anbringung einer Strahlmitteldüse an der Arbeitskammer, wird im Weiteren vorgeschlagen, dass die Aufnahmeeinrichtung für eine Strahlmitteldüse einen an der Arbeitskammer angeordneten, vorzugsweise schräg positionierten Rohrabschnitt umfasst. Beispielsweise lässt sich in diesen Rohrabschnitt der vordere Bereich einer Strahlmittelpistole einführen.

Um einen vollständigen Kreislauf des Strahlmittels zu erhalten, wird darüber hinaus vorgeschlagen, dass die Absaugeinrichtung das Strahlmittel zu einem Vorratsbehälter transportiert, aus welchem es zum Einschleudern in die Arbeitskammer wieder entnommen wird. Aus dem Vorratsbehälter gelangt das Strahlmittel z. B. über einen Schlauch an die Strahlmitteldüse, die zum Einschleudern des Strahlmittels mit Druckluft versorgt wird.

Zur Anpassung der Vorrichtung an unterschiedliche Arbeitsbedingungen, wird im Weiteren vorgeschlagen, dass die Arbeitskammer höhenverstellbar an einem Gestell angeordnet ist, welches insbesondere Rollen umfasst.

Bei einem Verfahren zum Entfernen einer Isolierschicht, Schmutzschicht oder dergleichen von wenigstem einem elektrischen Leitungsdraht im Bereich eines vorgegebenen Abschnitts wird zumindest der jeweilige Leitungsdraht mit dem abzuisolierenden/zu reinigenden Abschnitt in eine Arbeitskammer gebracht, in welcher die Isolierschicht, Schmutzschicht oder dergleichen durch einen Strahl aus Strahlmittel entfernt wird. Bei einem Bündel aus Leitungsdrähten, deren beispielsweise Enden zu reinigen sind, wird das Bündel gleichzeitig dem Strahl aus Strahlmittel ausgesetzt, was wie oben beschrieben eine rationelle Arbeitsweise ermöglicht.

Vorzugsweise wird die Vorrichtung und das Verfahren zum Entfernen des Isolierlacks an Leitungsdrähten von Drahtwicklungen beim Bau von Elektromotoren, Generatoren, Transformatoren oder dergleichen eingesetzt. Hierdurch kann Zeit für den Anschluss der Wicklungen eingespart werden, was sich positiv auf die Herstellungskosten derartiger Einheiten auswirkt.

Der Einsatz eines Strahlmittelstrahls zum Entfernen einer Isolationsschicht hat darüber hinaus den Vorteil, dass der Leiter selbst in seiner Form im Wesentlichen nicht verändert wird und nach dem Strahlvorgang eine sofort weiter verarbeitbare homogene Kontaktoberfläche zur Verfügung steht.

### Zeichnungen

Ein Ausführungsbeispiel der Erfindung ist in den Zeichnungen dargestellt und in der nachfolgenden Beschreibung unter Angabe weiterer Vorteile und Einzelheiten näher erläutert. Es zeigen
- Fig. 1a: einen Ausschnitt einer Vorrichtung zum Entfernen einer Isolierschicht von Leitungsdrähten in einer teilweise geschnittenen Seitenansicht,
- Fig. 1b: eine Seitenansicht eines Arbeitsgestells mit Arbeitskammer,
- Fig. 1c: eine Strahlmittelstation mit Absaugeinrichtung für eine Arbeitskammer und eine von einem Strahlmittelschlauch versorgte Strahlmittelpistole in der Seitenansicht und
- Fig. 2: der Aufbau einer Strahlmitteldüse in einer Schnittansicht.

### Beschreibung des Ausführungsbeispiels:

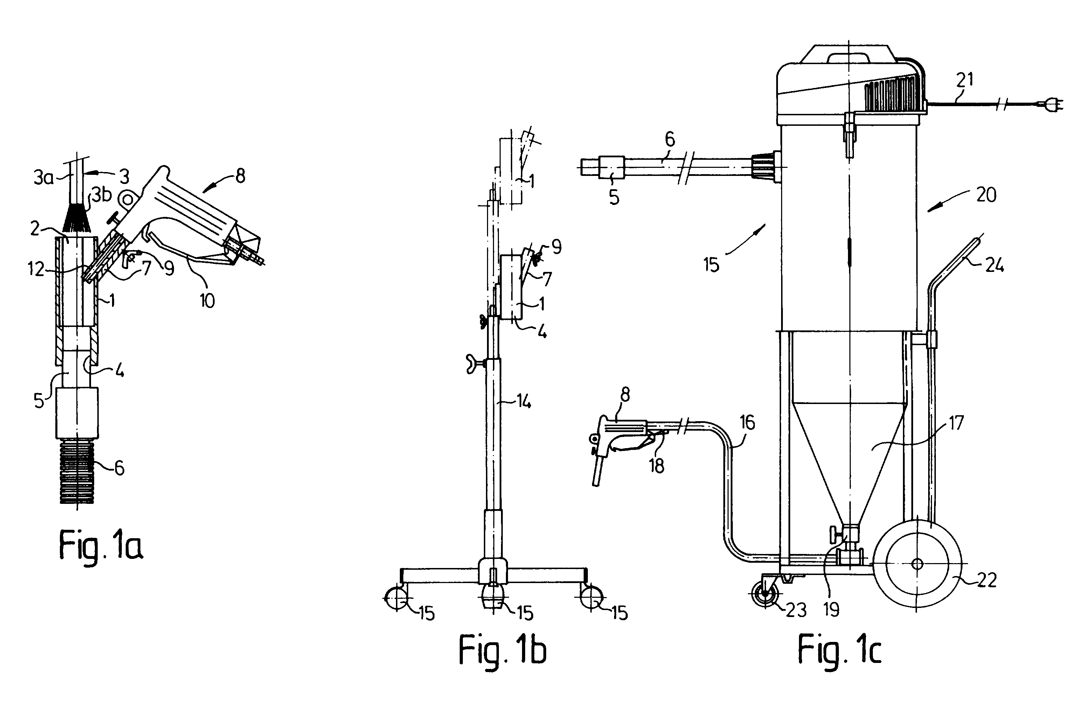

In Fig. 1a ist eine rohrförmige Arbeitskammer 1 im Schnittbild dargestellt. Die Arbeitskammer ist vertikal ausgerichtet und weist am oberen Ende eine öffnung 2 zum Einführen von abzuisolierenden Leitungsdrähten auf. In Fig. 1a ist beispielhaft ein Bündel 3 von Kupferdrähten gezeigt, das von einer Kunststoffummantelung 3a umgeben ist, deren freigelegte Enden 3b in die Arbeitskammer 1 eingeführt werden.

Am unteren Ende der Arbeitskammer 1 ist eine weitere Öffnung 4 angeordnet, in welcher das Anschlussende 5 eines Absaugschlauches 6 eingesteckt ist.

Im mittleren Bereich der rohrförmigen Arbeitskammer 1 ist seitlich ein Anschlussstutzen 7 angebracht, in welchem eine Strahlmittelpistole 8 eingesteckt und durch eine Feststellschraube 9 fixiert ist.

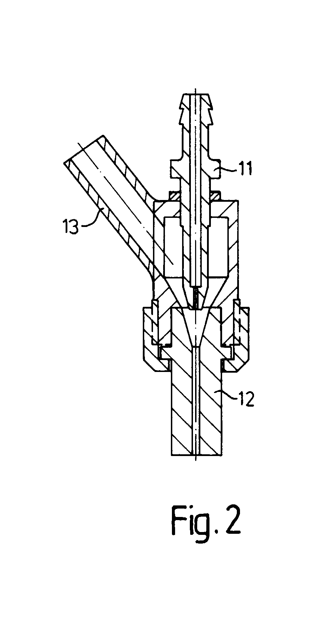

Nachdem das Drahtbündel 3 mit den Drahtenden 3b in die Arbeitskammer eingeführt ist, betätigt eine Bedienperson den Betätigungshebel 10 der Strahlmittelpistole 8, wodurch Pressluft durch eine Luftdüse 11 in eine Strahlmitteldüse 12 mit hoher Geschwindigkeit einströmt und dabei über einen seitlichen Strahmittelstutzen 13 zugeführtes Strahlmittel mitreist, womit ein Strahmittel/Luftgemisch durch die Strahlmitteldüse 12 mit hoher Geschwindigkeit austritt und auf die davor positionierten Enden 3b des Kupferdrahtbündels 3 trifft. Das soeben beschriebene Innenleben des vorderen Teils der Strahlmittepistole 8 ist einer Schnittansicht in Fig. 2 schematisch dargestellt.

Nach kurzer Zeit hat die Reinigungswirkung des Strahlmittelstrahles (beispielsweise ein Luft/Quarzsand-Gemisch) die Isolierleitschicht an den Kupferdrahtenden 3b entfernt. Die Bedienperson kann daraufhin den Betätigungshebel 10 der Strahlmittelpistole 8 freigeben und die gereinigten Drahtenden 3b aus der Arbeitskammer 1 herausziehen. Beim Reinigungsvorgang hat sich gezeigt, dass es überrachenderweise nicht notwendig ist, ein Drahtbündel speziell aufzufächern, um innenliegende Drähte in gewünschter Weise von der Isolierschicht zu entfernen. Ebenso ist es nicht erforderlich das Drahtbündel in verschiedenen Positionen mehrfach in die Arbeitskammer einzuführen, um einen gewünschten Abisoliererfolg zu erzielen. Vielmehr findet ein umfänglicher Reinigungsprozess der Drähte statt. Dabei kann sich auch die Form der Arbeitskammer günstig auswirken, wenn die Formgebung der Arbeitskammer dazu beiträgt, dass an der Arbeitskammerwandung reflektierte Strahlmittelteilchen bzw. von der Wandung der Arbeitskammer abgelenkte Strahlmittelteilchen das Drahtbündel noch treffen, die ansonsten keinen Beitrag zur Reinigungsleistung leisten würden.

In Fig. 1b ist die Anordnung einer Arbeitskammer 1 an einem höhenverstellbaren Gestell 14 in einer unteren mit ausgezogenen Linien dargestellten Position und einer oberen gestrichelt dargestellten Position abgebildet. Durch die Höheneinstellung lässt sich die Arbeitskammer an einem Arbeitsplatz in eine gewünschte Arbeitsposition bringen. Um einen einfachen Transport an unterschiedliche Einsatzorte zu gewährleisten, ist das Gestell 14 mit Rollen 15 ausgestattet.

In Fig. 1c ist eine Strahlmittelstation 15 dargestellt, die mit der am Gestell 14 angeordneten Arbeitskammer 1 gemäß Fig. 1b verbindbar ist. Dazu wird der Absaugschlauch 6 mit Anschlussende 5 in die untere öffnung 4 der Arbeitskammer 1 eingesteckt. Die Durchmesser sind vorzugsweise so aufeinander abgestimmt, dass sich das Anschlussende 5 in der Öffnung 4 verspannt. In den Anschlussstutzen 7 kann die Strahlmittelpistole 8 eingesteckt und über die Feststellschraube 9 fixiert werden. Die Strahlmittelpistole 8 wird über einen Strahlmittelschlauch 16 mit Strahlmittel aus einem Vorratsbehälter 17, der im unteren Bereich trichterförmig zuläuft, versorgt. An der Strahlmittelpistole 8 ist zur Pressluftversorgung ein Pressluftanschluss 18 angedeutet. Zur Regulierung der Strahlmittelversorgung ist am unteren Ende des Strahlmittelvorratsbehälter 17, ein Regulierventil 19 angeordnet. In die Arbeitskammer 1 durch die Strahlmittelpistole 8 eingestrahltes Strahlmittel wird über den Absaugschlauch 6 einer Absaugeinrichtung 20 zum Vorratsbehälter 17 zurück transportiert. Die Absaugeinrichtung wird beispielsweise über einen Elektromotor betrieben, der eine Anschlussleitung 21 besitzt.

Um auch die Strahlmittelstation 15 leicht zu verschiedenen Orten trangsportieren zu können, sind Transportrollen 22, 23 vorgesehen, wobei die Strahlmittelstation zum Bewegen vorzugsweise um die Drehachse der Rollen 22 mit Hilfe eines Transportgriffs 24 gekippt werden kann.

### Bezugszeichenliste:

- 1: Arbeitskammer
- 2: Öffnung
- 3: Kupferdrahtbündel
- 3a: Kunststoffummantelung
- 3b: Drahtenden
- 4: Öffnung
- 5: Anschlussende
- 6: Absaugschlauch
- 7: Anschlussstützen
- 8: Strahlmittelpistole
- 9: Feststellschraube
- 10: Betätigungshebel
- 11: Luftdüse
- 12: Strahlmitteldüse
- 13: Strahlmittelstutzen
- 14: Gestell
- 15: Strahlmittelstation
- 16: Strahlmittelschlauch
- 17: Vorratsbehälter
- 18: Pressluftanschluss
- 19: Regelventil
- 20: Absaugeinrichtung
- 21: Anschlussleitung
- 22: Rolle
- 23: Rolle
- 24: Transportgriff

## Patentansprüche

1. Vorrichtung zum Entfernen einer Isolierschicht, Schmutzschicht oder dergleichen von wenigstem einem Leitungsdraht im Bereich eines vorgegebenen Abschnitt, dadurch gekennzeichnet, dass eine den wenigstens einen Leitungsdraht zumindest mit dem abzuisolierenden/zu reinigenden Abschnitt (3) aufnehmende Arbeitskammer (1) vorgesehen ist, und dass die Arbeitskammer (1) Mittel zur Zuführung eines Strahlmittelstrahles in den Bereich des abzuisolierenden/zu reinigenden Anschnitts am Leitungsdraht umfasst.

2. Vorrichtung nach Anspruch 1, dadurch gekennzeichnet, dass die Arbeitskammer (1) mit einer Einrichtung zum Absaugen (20) von in die Arbeitskammer (1) eingestrahltem Strahlmittel in Verbindung steht oder mit dieser verbindbar ist.

3. Vorrichtung nach einem der vorhergehenden Ansprüche, dadurch gekennzeichnet, dass die Mittel zur Zuführung des Strahlmittelstrahles derart ausgestaltet sind, dass der Strahl aus Strahlmittel schräg in Bezug auf die Längserstreckung eines Leitungsdrahtes auf diesen trifft.

4. Vorrichtung nach einem der vorhergehenden Ansprüche, dadurch gekennzeichnet, dass die Mittel zur Zuführung des Strahlmittels eine an der Arbeitskammer (1) abgeordnete Aufnahmeeinrichtung (7) für eine Strahlmitteldüse (12) umfassen.

5. Vorrichtung nach einem der vorhergehenden Ansprüche, dadurch gekennzeichnet, dass an der Arbeitskammer (1) mehrere Strahlmitteldüsen (12) positioniert sind.

6. Vorrichtung nach einem der vorhergehenden Ansprüche, dadurch gekennzeichnet, dass die Arbeitskammer wenigstens eine Öffnung (2) zum Einführen von einem oder mehreren Leitungsdrahtabschnitten, z. B. Leitungsdrahtenden (3) aufweist.

7. Vorrichtung nach einem der vorhergehenden Ansprüche, dadurch gekennzeichnet, dass die Arbeitskammer (1) eine öffnung (4) zum Anbringen einer Absaugleitung (6) der Einrichtung zum Absaugen (20) von Strahlmittel besitzt.

8. Vorrichtung nach einem der vorhergehenden Ansprüche, dadurch gekennzeichnet, dass die Arbeitskammer (1) länglich, z. B. rohrförmig ist.

9. Vorrichtung nach Anspruch 8, dadurch gekennzeichnet, dass die Arbeitskammer vertikal oder auf die Horizontale bezogen schräg angeordnet ist.

10. Vorrichtung nach einem der Ansprüche 6 bis 9, dadurch gekennzeichnet, dass die öffnung (2) zum Einführen von einem oder mehreren Leitungsdrahtabschnitten an einem Ende der länglichen Arbeitskammer (1) angeordnet ist.

11. Vorrichtung nach einem der Ansprüche 6 bis 10, dadurch gekennzeichnet, dass die Öffnung (3) zum Anbringen einer Absaugleitung (6) sich im Bereich des gegenüberliegenden Endes der länglichen Arbeitskammer (1) befindet.

12. Vorrichtung nach einem der Ansprüche 4 bis 11, dadurch gekennzeichnet, dass die Aufnahmeeinrichtung für die Strahlmitteldüse (12) einen an der Arbeitskammer (1) angeordneten, vorzugsweise schräg positionierten Rohrabschnitt (7) umfasst.

13. Vorrichtung nach einem der Ansprüche 2 bis 12, dadurch gekennzeichnet, dass die Absaugeinrichtung (20) das Strahlmittel zu einem Vorratsbehälter (17) transportiert, aus welchem das Strahlmittel zum Einschleudern in die Arbeitskammer (1) wieder entnommen wird.

14. Vorrichtung nach einem der vorhergehenden Ansprüche, dadurch gekennzeichnet, dass die Arbeitskammer (1) höhenverstellbar an einem Gestell (14) angeordnet ist.

15. Verfahren zum Entfernen einer Isolierschicht, Schmutzschicht oder dergleichen von wenigstem einem elektrischen Leitungsdraht im Bereich eines vorgegebenen Abschnitts, dadurch gekennzeichnet, dass zumindest der jeweilige Leitungsdraht mit dem abzuisolierenden/zu reinigenden Abschnitt in eine Arbeitskammer (1) gebracht wird, in welcher die Isolierschicht, Schmutzschicht oder dergleichen durch einen Strahl aus Strahlmittel entfernt wird.

16. Verfahren nach Anspruch 15, dadurch gekennzeichnet, dass ein Bündel von Leitungsdrähten (3) mit den jeweiligen abzuisolierenden/zu reinigenden Abschnitten, z. B. Leitungsenden, in die Arbeitskammer eingeführt und gleichzeitig dem Strahl aus Strahlmittel ausgesetzt wird.

17. Verfahren nach Anspruch 15 oder 16, dadurch gekennzeichnet, dass der Strahl aus Strahlmittel schräg zur Längserstreckung von einem oder mehreren eingeführten Leitungsdrahtabschnitten auf diese gerichtet wird.

18. Verwendung der Vorrichtung und/oder des Verfahrens nach einem der vohergehenden Ansprüche zum Entfernen des Isolierlacks an Leitungsdrahtenden von Drahtwicklungen beim Bau von Elektromotoren, Generatoren, Transformatoren oder dergleichen.
